# EUROPÄISCHE PATENTANMELDUNG

(11) **EP 4 261 493 A1**
(43) Veröffentlichungstag der Anmeldung: **18.10.2023**
(21) Anmeldenummer: 23166931.8
(22) Anmeldetag: 06.04.2023
(51) Int. Cl.: F41G 7/22, F41H 11/02, F42B 15/01, G05D 1/10

(54) **VERFAHREN ZUM LENKEN EINES FLUGKÖRPERS**

(30) Priorität: 13.04.2022 DE 102022001285
(71) Anmelder: Diehl Defence GmbH & Co. KG, 88662 Überlingen (DE)
(72) Erfinder: Kuhn, Thomas, 88633 Heiligenberg (DE)
(74) Vertreter: Diehl Patentabteilung

(57) **Zusammenfassung**

Die Erfindung betrifft ein Verfahren zum Lenken eines durch ein Triebwerk (4) angetriebenen Flugkörpers (2) zu einem manövrierfähigen Ziel (14) innerhalb einer Midcourse-Phase des Flugs.

Um eine hohe Robustheit gegenüber Manövern des Ziels (14) und Unsicherheiten bezüglich des eigenen Flugkörpers (2) zu erreichen, wird vorgeschlagen, dass in einem Planungszyklus
a) eine Prädiktion einer möglichen Flugbahn (22) des Flugkörpers (2) von seinem aktuellen Flugpunkt (26) zum Ziel (14) mit einem Prädiktor (38) erstellt wird,
b) eine zukünftige Annäherung (24) des Flugkörpers (2) ans Ziel (14) auf dieser Flugbahn (22) anhand des Prädiktors (38) bestimmt und bewertet (52) wird,
c) weitere Prädiktionen möglicher Flugbahnen (22) des Flugkörpers (2) zum Ziel (14) ausgehend vom gleichen aktuellen Flugpunkt (26) berechnet werden durch mehrfache Variationen (56) von Steuergrößen des Flugkörpers (2), wobei die resultierenden Annäherungen (24) des Flugkörpers (2) ans Ziel (14) jeweils bewertet (52) werden, und
d) anhand der Bewertungen eine der Flugbahnen (22) des Flugkörpers (2) ausgewählt und ein erstes Teilstück (28) dieser Flugbahn (22) abgeflogen wird,
wobei der Planungszyklus mehrfach für nachfolgende Teilstücke (28) wiederholt wird.

## Beschreibung

Die Erfindung betrifft ein Verfahren zum Lenken eines durch ein Triebwerk angetriebenen Flugkörpers zu einem manövrierfähigen Ziel innerhalb einer Midcourse-Phase des Flugs.

Angreifende Flugzeuge oder Flugkörper werden häufig durch Abfangflugkörper bekämpft. Nach dem Start des Abfangflugkörpers steigt dieser in einer Startphase zunächst auf und beginnt seinen Flug grob in Richtung zum Ziel hin. Eine anschließende Midcourse-Phase dient dazu, den Großteil der Distanz zum Ziel zu überwinden und in dessen Nähe zu kommen, insbesondere so nah, dass bordeigene Systeme des Abfangflugkörpers ausreichen, um das Ziel in einem sich an die Midcourse-Phase anschließenden Endgame zielgenau anfliegen zu können.

In der US 8,106,340 B1 ist beschrieben, wie ein predicted intercept point (PIP) berechnet wird. Die Lenkung des Abfangflugkörpers wird so gesteuert, dass er den PIP anfliegt. Dieses Verfahren wird während des Midcourse repetitiv wiederholt, sodass der Abfangflugkörper während seines Flugs zum Ziel ständig korrigiert wird.

Aus der DE 10 2010 032 281 A1 ist es bekannt, eine voraussichtliche Flugbahn des Ziels bei der Steuerung des Abfangflugkörpers mit einzubeziehen und diesen in Abhängigkeit von dieser Flugbahn zu steuern. Anstelle der üblichen Proportionalnavigation wird die Zero Effort Miss (ZEM)-Lenkung verwendet.

Es ist eine Aufgabe der Erfindung, einen Flugkörper und ein Verfahren zum Lenken eines Flugkörpers innerhalb einer Midcourse-Phase anzugeben, das hinsichtlich seiner Robustheit verbessert ist.

Die auf das Verfahren gerichtete Aufgabe wird gelöst durch ein Verfahren zum Lenken eines durch ein Triebwerk angetriebenen Flugkörpers zu einem manövrierfähigen Ziel innerhalb einer Midcourse-Phase des Flugs, bei dem erfindungsgemäß in einem Planungszyklus
a) eine Prädiktion einer möglichen Flugbahn des Flugkörpers von seinem aktuellen Flugpunkt zum Ziel mit einem Prädiktor erstellt wird,
b) eine zukünftige Annäherung des Flugkörpers ans Ziel auf dieser Flugbahn anhand des Prädiktors bestimmt und bewertet wird,
c) weitere Prädiktionen möglicher Flugbahnen des Flugkörpers zum Ziel ausgehend vom gleichen aktuellen Flugpunkt berechnet werden durch mehrfache Variationen von Steuergrößen des Flugkörpers, wobei die resultierenden Annäherungen des Flugkörpers ans Ziel jeweils bewertet werden, und
d) anhand der Bewertungen eine der Flugbahnen des Abfangflugkörpers ausgewählt wird, und
ein erstes Teilstück dieser Flugbahn abgeflogen wird und der Planungszyklus mehrfach für nachfolgende Teilstücke wiederholt wird.

Die Erfindung geht von der Überlegung aus, dass die Robustheit der Flugkörperlenkung, also eine zum Ziel führende Lenkung, auch wenn die Annahmen von der Realität abweichen, erhöht werden kann durch die Anwendung der Model Predictive Control (MPC) (Modellprädiktive Regelung) auf die Lenkung des Flugkörpers. Bei der MPC kann ein dynamisches, zeitdiskretes Modell der Flugsteuerung verwendet werden, um die zukünftige Lenkung des Flugkörpers in Abhängigkeit von freien Steuerparametern zur Lenkung des Flugkörpers zu berechnen. Dies ermöglicht die Berechnung von Steuerparametern hoher Güte zur Lenkung. Die Güte kann anhand einer Gütefunktion oder Kostenfunktion, die zumindest ein Gütekriterium enthält, definiert werden. Die Anwendung der MPC auf die Lenkung des Flugkörpers kann als Model Predictive Guidance (MPG) bezeichnet werden.

Die Eingangsgrößen der Lenkung, die die Größen der Steuerparameter der Lenkung enthalten, also die Steuergrößen, können in einem mathematischen Deskriptor, dem Prädiktor, zusammengefasst werden. Der Prädiktor enthält also neben einer Funktion zur Berechnung der Flugbahn auch die Steuergrößen der Lenkung des Flugkörpers. Mittels des Prädiktors lässt sich der Flug des Flugkörpers vorhersagen. Dieser vorausberechnete Flug muss am Anfang des Verfahrens nicht besonders gut sein, da die Steuergrößen variiert und im Laufe des Verfahrens verbessert werden. Hierdurch wird die Flugbahn zum Ziel, also in Richtung zum Ziel, verbessert. Durch die Variation der Steuergrößen liegen - ausgehend vom gleichen Anfangspunkt der Berechnung, der der aktuelle Flugpunkt des Flugkörpers sein kann - mit dem Prädiktor mehrere verschiedene Flugbahnen zum Ziel vor. Anhand von vorgegebenen Gütekriterien können die verschiedenen Flugbahnen bewertet werden und die Flugbahn mit der besten Güte kann ausgewählt werden. Die dieser Flugbahn zugrundeliegenden Steuergrößen können zum Lenken des Flugkörpers verwendet werden. Dieser Planungszyklus mit seinen vielen möglichen Flugbahnen wird im Laufe des Flugs des Flugkörpers vielfach wiederholt, sodass der Flug nach jedem Teilstück des Flugs korrigiert werden kann.

Der Flugkörper fliegt zum Ziel, also in die Richtung des Ziels, sodass eine Annäherung des Flugkörpers an das Ziel erfolgt. Der Flugkörper kann ein Abfangflugkörper zum Abfangen eines manövrierfähigen Ziels oder ein Bodenflugkörper zum Bekämpfen eines Seeziels oder eine Landziels ein. Sein Triebwerk kann ein Raketentriebwerk, insbesondere ein Festbrennstofftriebwerk sein. Es ist jedoch auch ein luftatmendes Triebwerk möglich, insbesondere ein Ramjet-Triebwerk. Alternativ ist der Flugkörper ein unbemanntes Luftfahrzeug. Das Ziel ist zweckmäßigerweise ein Luftziel, wie ein Marschflugkörper, ein ballistischer Flugkörper, ein Lenkflugkörper, oder dergleichen, oder ein Bodenziel, wie ein Seeziel oder ein Landziel. Der Flug des Flugkörpers kann in eine Startphase, eine Midcourse-Phase und ein Endgame unterteilt sein. Die Midcourse-Phase kann mit einem Aufschalten eines Suchers des Flugkörpers auf das Ziel beendet sein. Bei einem Bodenflugkörper kann das Ende der Midcourse-Phase bei Erreichen eines Bekämpfungsgebiets liegen, wo beispielsweise Ausweichbewegungen nötig sind. Diese können durch ein vom Ziel kommenden Flugkörper erzwungen werden.

Ein Durchlauf eines Planungszyklus kann die Schritte a) bis d) umfassen. Mehrere Durchläufe bilden einen Planungszyklus. Mehrere Planungszyklen können in einen MPG-Zyklus zusammengefasst werden. In einem Planungszyklus werden viele mögliche Flugbahnen ausgehend vom aktuellen Flugpunkt berechnet und eine von ihnen wird ausgewählt und als Grundlage der Steuerung des Flugs des Flugkörpers verwendet. Der Planungszyklus wird im Laufe des Flugs wiederholt, sodass eine repetitive zeitliche Wiederholung der Variationen der Flugbahn erfolgt, insbesondere von jeweils anderen aktuellen Flugpunkten des Flugkörpers. Das Variieren der berechneten Flugbahn bzw. der Steuergrößen des Prädiktors und das Aussuchen der geeignetsten Flugbahn entspricht einem Optimierungsverfahren zur Optimierung der Flugkörperflugbahn. Es ist hierbei jedoch nicht notwendig, dass das Optimum der Flugbahn erreicht wird, denn bereits eine Verbesserung gegenüber einer anfänglichen Flugbahn oder ein temporäres Optimum, wie die temporär beste verfügbare Flugbahn, ist ausreichend.

In einem Planungszyklus beginnen die vielen Flugbahnen zweckmäßigerweise jeweils vom aktuellen Flugpunkt, der der reale, aktuelle Aufenthaltspunkt des Flugkörpers zu Beginn, während oder am Ende des Planungszyklus sein kann oder am Anfang oder Ende eines Teilstücks der Flugbahn liegen kann. Der Flugpunkt kann ein räumlicher, mathematischer Start eines Berechnungsvorgangs sein, wie ein theoretischer Ort des Flugkörpers, beispielsweise der Ausgangspunkt eines Vektors. Im Planungszyklus werden so mehrere Flugbahnen beginnend vom gleichen aktuellen Flugpunkt berechnet. Da die Berechnung etwas Zeit in Anspruch nimmt, währenddessen der Flugkörper durch den realen Raum fliegt, der Startpunkt der Bahnen jedoch identisch sein sollte, muss der theoretische Aufenthaltsort des Flugkörpers bzw. der mathematische Start der Berechnung nicht exakt im realen aktuellen Aufenthaltsort des Flugkörpers liegen. Er kann generell ein rechnerischer Ort sein, insbesondere wenn gemessene Koordinaten des Flugkörpers nicht verfügbar sind. Neben dem Ort kann der aktuelle Flugpunkt auch die aktuelle Flugrichtung, die aktuelle Fluggeschwindigkeit und/oder aktuelle Beschleunigung bzw. den Vorschub des Flugkörpers enthalten.

Der Prädiktor kann eine oder mehrere Funktionen und mathematische Größen enthalten, wie Skalare, Vektoren, und/oder andere Daten, die eine Flugbahn mathematisch beschreiben. Der Prädiktor kann eine Anzahl von Differentialgleichungen enthalten, die beispielsweise numerisch mittels Runge-Kutta-Integration gelöst werden. Der Prädiktor kann auch einen inertialen Zustand, wie den aktuellen Flugpunkt, enthalten, sodass eine Flugbahn ausgehend vom inertialen Zustand anhand der Größen mathematisch beschrieben wird. Der inertiale Zustand muss jedoch nicht Bestandteil des Prädiktors sein, sondern kann auch zusätzlich herangezogen werden zur Beschreibung der Bahn. Die Größen können Steuergrößen, also Größen von Steuerparametern des Flugkörpers sein. Die Steuerparameter sind zweckmäßigerweise Parameter, die einen Einfluss auf den Flug des Flugkörpers haben und steuerbar sind, wie Querbeschleunigungen in zwei zweckmäßigerweise orthogonale Raumrichtungen und insbesondere auch ein Startzeitpunkt einer zweiten Triebwerksstufe und/oder ein Vorschub des Triebwerks.

Um eine vorteilhafte Flugbahn zu ermitteln, werden weitere mögliche Flugbahnen des Flugkörpers zum Ziel ausgehend vom gleichen aktuellen Flugpunkt prädiziert. Hierfür werden Steuergrößen des Flugkörpers mehrfach verändert. Die Steuerparameter an sich können in der Variation gleich bleiben, nur ihre Steuergrößen, wie Werte, Vektoren oder Matrizen werden verändert. Mit jeder Flugbahn wird eine Annäherung des Flugkörpers ans Ziel beschrieben. Diese wird bewertet. Es kann die Annäherung insgesamt bewertet werden, oder die Annäherung in einem vorbestimmten Annäherungsgebiet, z.B. in einem vorbestimmten Radius um das Ziel. Das Annäherungsgebiet kann ein Bereich um das Ziel sein, in dem eine Änderung der Lenkstrategie des Flugkörpers sinnvoll sein kann. Beispielsweise wird die Grenze des Annäherungsgebiets um das Ziel von den Orten gebildet, an denen ein Sucher des Flugkörpers auf das Ziel voraussichtlich aufschalten kann oder aufschaltet. Nun kann der Flugkörper durch den Sucher gelenkt werden. In diesem Fall wäre das Annäherungsgebiet das Gebiet des Endgame. Ein anderes Annäherungsgebiet kann durch einen Bekämpfungsradius um das Ziel herum gebildet werden, innerhalb dessen das Ziel den Flugkörper bekämpfen kann oder bekämpft. Auch hier kann es sinnvoll sein, die Lenkstrategie des Flugkörpers zu ändern.

Es kann alternativ oder zusätzlich die Annäherung in einem Punkt bewertet werden, z.B. in einem nahestem Annäherungspunkt der Flugbahn. Der naheste Annäherungspunkt kann der Aufschlagpunkt des Flugkörpers im Ziel sein. Es ist jedoch nicht notwendig, dass sich Flugkörper und Ziel exakt treffen, sodass der naheste Annäherungspunkt der Punkt der Flugbahn ist, an dem die Annäherungsgeschwindigkeit des Flugköpers zum Ziel einen Nullpunkt durchtritt und danach negativ wird, der Flugkörper sich also wieder vom Ziel entfernt. Der naheste Annäherungspunkt der Flugbahn ist unabhängig davon, ob der Flugkörper an diesem Punkt das Ziel bekämpfen kann oder nicht. Denn gerade am Anfang des Variationsverfahrens wird der naheste Annäherungspunkt eher weit entfernt vom Ziel sein.

Die Bewertung kann eine oder mehrere Flugeigenschaften des Flugkörpers betreffen, die anhand von Gütekriterien bewertet werden. Eine Bewertung der Annäherung führt zu einem Güteergebnis, wie einem Gütevektor, einem Gütewert oder einer Gütefunktion. Die Gütekriterien können in einer Gütefunktion oder Kostenfunktion zusammengefasst werden, sodass den mehreren Gütekriterien verschiedene Gewichtungen in der Kostenfunktion gegeben werden können. Anhand der Kostenfunktion mit ihren mehreren Gütekriterien kann unter Verwendung der Flugeigenschaften ein Güteergebnis bzw. eine Güte berechnet werden. Diese dient der Auswahl der Flugbahn, beispielsweise der mit dem besten Güteergebnis. Das kann die Flugbahn mit den geringsten Kosten sein, wobei Kosten bzw. Güteergebnis durch die Kostenfunktion bestimmt werden. Diese Flugbahn kann nun entlang eines ersten bzw. nächstfolgenden Teilstücks abgeflogen werden. Das bedeutet, dass die Steuergrößen des Prädiktors dieser Flugbahn zur Lenkung des Flugkörpers verwendet werden, zumindest dieses Teilstück weit.

In einer vorteilhaften Ausführungsform der Erfindung beschreibt der Prädiktor auch eine angenommene Flugbahn des Ziels. Der Prädiktor kann also zusätzlich zur Flugbahn des Flugkörpers auch eine angenommene Flugbahn des Ziels enthalten, sodass er beide Bahnen beschreibt. Auf diese Weise kann eine Annäherung der beiden Flugkörper aneinander berechnet werden. Die Flugbahn des Ziels bleibt zweckmäßigerweise während der vom aktuellen Flugpunkt ausgehenden Variation der Flugkörperflugbahnen gleich, sodass innerhalb des Planungszyklus mehrere Flugkörperflugbahnen mit jeweils einer gleichbleibenden Zielflugbahn entstehen. Im Laufe des realen Flugs des Flugkörpers kann jedoch die angenommene Flugbahn des Ziels variieren, sodass sich beispielsweise von Flugpunkt zu Flugpunkt die Daten der angenommen Zielflugbahn verändern können, z.B. entsprechend neuer Zieldaten, die vom Boden, zum Beispiel von einem Feuerleitsystem ermittelt worden sein können. Im Übrigen können alle zur Prädizierung der Flugbahn des Flugkörpers beschriebenen Details auch auf die Prädizierung der Flugbahn des Ziels angewendet werden.

Die Prädiktionen eines Planungszyklus unterscheiden sich vorteilhafterweise durch unterschiedliche Steuergrößen der gleichen Steuerparameter voneinander. Die Steuerparameter an sich können über den gesamten Planungszyklus gleich bleiben, insbesondere über den gesamten Midcourse-Flug, wobei das Starten eines zweiten Triebwerkspulses ein einmaliger Vorgang ist, sodass der Steuerparameter des Starts des zweiten Triebwerkspulses nach diesem Start aus dem Set der Steuerparameter genommen werden kann. Ist der zweite Puls gezündet, wird dieser Steuerparameter nicht mehr bei den nachfolgenden Prädizierungen verwendet.

Jede einzelne der mehreren prädizierten Flugbahnen des Flugkörpers wird zweckmäßigerweise in einem Prädiktionszyklus aus vielen Rechenschritten berechnet. Jeder Rechenschritt kann die Integration von einer oder mehreren Differentialgleichungen umfassen. Die Flugbahn kann in viele Prädiktionabschnitte unterteilt sein, die jeweils mit einem Rechenschritt oder Prädiktionsschritt berechnet werden. Eine Berechnung einer Flugbahn des Flugkörpers kann insofern in mehreren Prädiktionsschritten in einem Prädiktionszyklus erfolgen, wobei eine Flugbahn in einem Prädiktionszyklus berechnet wird. Umfasst der Prädiktor auch die Flugbahn des Ziels, kann in einem Prädiktionszyklus sowohl die Bahn des Flugkörpers als auch die Bahn des Ziels berechnet werden oder eine Relativbahn des Flugkörpers zur Bahn des Ziels.

Der Planungszyklus ist dem Prädiktionszyklus übergeordnet und enthält eine Vielzahl von Prädiktionszyklen. Dem Planungszyklus kann wiederum ein MPG-Zyklus (Model Predictive Guidance) übergeordnet sein, der eine Vielzahl von Planungszyklen enthält. Mit den Daten eines Planungszyklus wird ein Teilstück der realen Flugbahn abgeflogen, wobei die reale Midcourse-Flugbahn in viele Teilstücke unterteilt ist, zu denen jeweils ein Planungszyklus stattfindet. Die übergeordnete Variation der Flugbahn des Flugkörpers kann insofern in drei ineinander liegenden Rechenzyklen erfolgen:
- der Berechnung einer Flugbahn des Flugkörpers in mehreren Prädiktionsschritten in einem Prädiktionszyklus,
- die Berechnung mehrerer Flugbahnen in einem Planungszyklus und
- die Wiederholung der Planungszyklen für mehrere Teilstücke entlang der realen Flugbahn in einem MPG-Zyklus.

Hierbei kann der MPG-Zyklus innerhalb der Midcourse-Phase liegen und insbesondere vom Beginn des Midcourse bis zum Ende des Midcourse reichen.

Es ist die real abgeflogene Flugbahn von der berechneten Flugbahn zu unterscheiden. Die reale Flugbahn ist in mehrere Teilstücke unterteilt, die sich jeweils über eine räumliche Länge erstrecken. Die Teilstücke müssen nicht gleich lang sein, sondern können sich an äußeren Gegebenheiten ausrichten, wie dem Eingang von neuen Daten über das Verhalten des Ziels. Zu jedem Teilstück wird ein Planungszyklus ausgeführt, der eine zeitliche Dauer der Berechnung darstellt. Er kann so lang sein wie das Abfliegen eines Teilstücks oder auch kürzer. Innerhalb eines Planungszyklus oder Teilstücks liegen viele Lenkzyklen, also Berechnungen der Lenkkommandos aus der vorgegebenen, konstanten Flugbahn des aktuellen Planungszyklus. In einem Planungszyklus liegen beispielsweise 100 Lenkzyklen. Noch kürzer können Flugreglerzyklen zur Ansteuerung der Lenkflügel sein, sodass ein Lenkzyklus viele Flugreglerzyklen enthält.

Eine berechnete Flugbahn kann in mehrere Abschnitte oder Lenkabschnitte unterteilt sein, beispielsweise drei Abschnitte. Der Prädiktor enthält somit zweckmäßigerweise zu jedem der Abschnitte einen Satz an Steuergrößen, wobei jeder Satz zumindest eine Steuergröße zu jedem Steuerparameter des Prädiktors enthält. Bei drei Abschnitten der Flugbahn hat der Prädiktor beispielsweise sieben Dimensionen: 3 x 2 Dimensionen für die Querbeschleunigungen in x- und y-Richtung in den 3 Abschnitten sowie einen Zeitpunkt für den Start des zweiten Triebwerkspulses. Die Optimierung kann dann mit einem 7-dimensionalen Vektor durchgeführt werden.

Die Abschnitte können in eine Vielzahl von Prädiktionsschritten unterteilt sein. Diese können Integrationsabschnitte mit der Länge einer Prädiktionsschrittweite sein. Die Abschnitte können gleich lang sein, sodass die noch verbleibende Flugstrecke zum Ziel bzw. zur Annäherung in gleichlange Abschnitte unterteilt ist. Generell kann die Anzahl der Abschnitte während des realen Flugs des Flugkörpers konstant bleiben, sodass die Abschnitte von Teilstück zu Teilstück kürzer werden.

Damit die benötigte Rechenleistung nicht zu stark ansteigt, kann jeder Abschnitt mit konstanten Steuergrößen abgeflogen werden. Beispielsweise bleiben die beiden Querbeschleunigungen über den gesamten Abschnitt konstant. Alternativ kann das Lenkmanöver des betreffenden Abschnitts an den Beginn dieses Abschnitts gelegt werden, wobei der Flugkörper nach dem Lenkmanöver den Rest des Abschnitts ohne weitere Lenkmanöver fliegt, und der entstehende Lenkfehler (Zero Effort Miss) in die Bewertung der Flugbahn mit einbezogen wird.

Wie beschrieben, ist es vorteilhaft, wenn die Berechnung der Flugbahn des Flugkörpers - und insbesondere auch jeder Abschnitt der Flugbahn - in mehrere Prädiktionsschritte unterteilt wird. Die Prädiktionsschrittweite ist zweckmäßigerweise äquidistant, beispielsweise 2 Sekunden. Die Flugbahn bzw. der Abschnitt wird somit in viele gleichlange Prädiktionsschritte unterteilt. Hierbei kann es vorkommen, dass ein Abschnitt innerhalb eines Prädiktionsschritts endet. Ist ein Abschnitt beispielsweise 17 Sekunden lang und die Prädiktionsschritte jeweils 2 Sekunden, endet der Abschnitt mitten im neunten Prädiktionsschritt. Da mit dem neuen Abschnitt ein neues Lenkmanöver stattfinden kann, somit die Beschleunigung des Flugkörpers geändert wird, ist die Integration dieses unterbrochenen Prädiktionsschritts komplex. Um dies zu vermeiden, ist es vorteilhaft, wenn die berechnete Beschleunigung des Flugkörpers über jeden der Prädiktionsschritte konstant ist. Bei dem Beispiel wird der neunte Prädiktionsschritt daher verkürzt, sodass sein Ende auf dem Abschnittsende liegt und ein neuer Prädiktionsschritt genau mit dem neuen Abschnitt beginnt. Hierdurch gibt es keine Beschleunigungsbrüche innerhalb der Prädiktionsschritte.

Die Prädiktionsschritte gehorchen vorteilhafterweise einer oder mehreren der folgenden Bedingungen:
- Innerhalb eines jeden Prädiktionsschritts sollte die Beschleunigung gleich sein. Bei allen Änderungen der Beschleunigung, auch bei einem Start eines Triebwerkspulses, sollte ein Prädiktionsschritt enden und ein neuer beginnen.
- Bei mehreren Lenkabschnitten sollte an jedem Abschnittsende auch der laufende Prädiktionsschritt enden.
- Die Prädiktionsschritte können verkürzt werden, wenn die Beschleunigung des Ziels über einen Grenzwert ansteigt.
- Die Prädiktionsschritte können in Abhängigkeit von der noch verbleibenden Flugzeit oder der Entfernung zum Ziel verkürzt werden, um beispielsweise zum Ende des Flugs hin präziser zu fliegen.

Um dem Ziel möglichst nahe zu kommen, sollte die zukünftige Flugbahn des Ziels in den Planungszyklus mit einbezogen werden. Da die zukünftige Flugbahn des Ziels nicht bekannt ist, können Hypothesen zur Flugbahn des Ziels verwendet werden. Welche Hypothese verwendet wird, kann von der vergangenen Flugbahn des Ziels abhängig gemacht werden. Bei einem Geradeausflug des Ziels kann dieser weiterhin angenommen werden. Fliegt das Ziel ein Ausweichmanöver, kann beispielsweise die Hypothese angenommen werden, dass das Ausweichmanöver bis zu einem Tail On-Flug fortgesetzt wird, also bis in Fluchtrichtung. Wird ein Wedeln erkannt, um den Miss des Flugkörpers zu vergrößern, kann auch dieses Manöver weiter in die Zukunft prädiziert werden. Meist ist die Hypothese jedoch nicht eindeutig ableitbar, sodass mehrere mögliche Flugbahnen des Ziels infrage kommen. In einem solchen Fall ist es vorteilhaft, wenn mehrere angenommene Flugbahnen des Ziels bestimmt werden und daraus eine theoretische Flugbahn des Ziels abgeleitet wird, die in den Prädiktor eingeht. Die theoretische Flugbahn kann eine der angenommenen Flugbahnen sein, ein Median, ein geometrischer Schwerpunkt der angenommenen Flugbahnen oder nach anderen Gesichtspunkten gewählt werden.

Die zukünftigen Annäherungen des Flugkörpers ans Ziel auf den Flugbahnen des Planungszyklus werden bewertet, also zumindest ein Annäherungscharakteristikum jeder der betreffenden Flugbahnen. Die Bewertung einer Flugbahn kann unter Verwendung von einem oder mehreren der folgenden Gütekriterien durchgeführt werden:
- Der Miss oder naheste Abstand des Flugkörpers zum Ziel. Je kleiner der naheste Abstand ist, desto höher ist die Güte. Es ist vorteilhaft, wenn der naheste Abstand nicht absolut gemessen wird, sondern relativ zu einer anderen Größe. Beispielsweise kann er auf die Länge der Sichtlinie zum Ziel normiert werden, sodass er absolut gesehen im Laufe des Flugs bei gleicher Bewertung abnimmt.
- Die Flugzeit vom aktuellen Flugpunkt zum nahesten Annäherungspunkt. Je kürzer die Flugzeit ist, desto höher ist die Güte.
- Die Fluggeschwindigkeit des Flugkörpers im nahesten Annäherungspunkt. Je höher die Fluggeschwindigkeit ist, desto höher ist die Güte.
- Die Begegnungsgeometrie von Flugkörper und Ziel im nahesten Annäherungspunkt. Die Begegnungsgeometrie kann ausschlaggebend für die Erkennung des Ziels durch einen Sucher des Flugkörpers sein, für die Bekämpfung oder für das Verfolgen eines letzten Ausweichmanövers.
- Das Einhalten einer vorbestimmten Gipfelhöhe, beispielsweise um nicht frühzeitig erkannt zu werden.

Generell können die Flugbahnen eines Planungszyklus an sich bewertet werden, wobei die Bewertung der zukünftigen Annäherung des Flugkörpers ans Ziel auf dieser berechneten Flugbahn ein Teil der Gesamtbewertung ist. Hierbei ist es vorteilhaft, wenn in eine Bewertung der Flugbahn der Lenkaufwand des Flugkörpers entlang dieser Flugbahn eingeht. Je höher der Lenkaufwand ist, desto mehr Energie geht verloren, sodass die Bewertung schlechter ist. Zudem steht bei einem hohen Lenkaufwand weniger Lenkreserve für Verfolgungsmanöver zur Verfügung, was ebenfalls die Bewertung senkt.

Intensive Verfolgungsmanöver werden erst nahe am Ziel notwendig. Das Aufrechterhalten einer größtmöglichen Lenkreserve ist daher umso wichtiger, je näher der Flugkörper dem Ziel kommt. Es ist daher vorteilhaft, wenn ein späterer Lenkaufwand die Bewertung mehr senkt, als der gleiche Lenkaufwand früher.

Ein hoher Lenkaufwand am Ende der Flugbahn ist somit negativer als am Anfang der Flugbahn, da am Ende noch Reserve für harte Verfolgungsbewegungen sein sollte.

Die Bewertung einer Flugbahn kann für die mehreren Abschnitte der Flugbahn unterschiedlich sein. Zweckmäßigerweise wird ein gleicher Lenkaufwand von Abschnitt zu Abschnitt stärker negativ bewertet, beispielsweise im ersten Abschnitt mal -1 genommen, im zweiten mal -2 und im dritten mal -4.

Ebenfalls in die Bewertung eingehen kann das Gütekriterium, wie lange der Flugkörper das Ziel auf mehreren angenommenen Zielflugbahnen erreichen kann. Wenn mehrere mögliche Zielflugbahnen vorliegen, sollte der Flugkörper das Ziel möglichst lange erreichen können, egal auf welche der Zielflugbahnen das Ziel einschwenkt. Es ist daher vorteilhaft, wenn mehrere angenommene Flugbahnen des Ziels bestimmt werden und in die Bewertung mit eingeht, wie lange der Flugkörper das Ziel auf allen diesen Flugbahnen erreichen kann.

Ein Planungszyklus kann beendet werden, wenn eine Flugbahn des Flugkörpers gefunden ist, die eine ausreichende Güte aufweist, sodass die Mission des Flugkörpers genügend aussichtsreich erfolgreich durchgeführt werden kann. Das kann der Fall sein, wenn die Bewertungen einen vorbestimmten Schwellwert erreicht. Es gibt jedoch auch andere sinnvolle Abbruchkriterien, sodass es vorteilhaft ist, dass ein Planungszyklus beendet wird, wenn zumindest eines der folgenden Kriterien erreicht wird:
- Zumindest eine der Bewertungen erreicht einen vorbestimmten Schwellwert.
- Die Bewertungen laufen gegen eine Konstante. Dann ist absehbar, dass die weitere Variation der Flugbahnen nicht zu wesentlich besseren Bewertungen führt, sodass sie abgebrochen werden kann.
- Bei der Variation der Steuergrößen fällt der Raumabstand der Steuergrößen im Parameterraum unter einen vorbestimmten Grenzwert. Es ist dann absehbar, dass sich die Steuergrößen bei einer weiteren Variation der Flugbahnen nicht mehr sehr verändern werden, sodass die Prädizierungen abgebrochen werden können.
- Eine Maximalanzahl an Bahnen wurde berechnet. Es kann vorkommen, dass keine gute Flugbahn ermittelbar ist. Dann ist es besser, die Prädizierungen abzubrechen und von einem anderen Ausgangspunkt neu zu beginnen, als die aussichtsarme Variation der Flugbahnen länger fortzusetzen.

Nach einem Abschluss eines Planungszyklus wird ein neuer Planungszyklus entweder unmittelbar oder nach Ablauf eines Wartekriteriums begonnen. Dieser neue Planungszyklus kann als Startwerte für die Prädiktion die Steuergrößen der letzten verwendeten Flugbahn verwenden. Für den Beginn eines Planungszyklus können einer oder mehrere der folgenden Kriterien gelten:
- Der letzte Planungszyklus ist abgeschlossen.
- Ein vorbestimmter Zeitpunkt ist erreicht, beispielsweise wenn eine vorgegebene Wartezeit vergangen ist oder ein vorgegebener absoluter Zeitpunkt erreicht ist.
- Es liegen neue Zieldaten vor. Wenn das Ziel sich anders verhalten hat, als im vergangenen Planungszyklus angenommen wurde, ist es sinnvoll, die Flugbahn zügig an das neue Zielverhalten anzupassen. Hierfür kann ein Planungszyklus begonnen werden, der die neuen Zieldaten berücksichtigt. Gegebenenfalls kann ein noch laufender Planungszyklus abgebrochen werden, damit die neuen Zieldaten zügig verarbeitet werden.
- Der Ist-Zustand des Flugkörpers weicht vom berechneten Zustand mehr als um ein vorbestimmtes Maß ab. Es kann vorkommen, dass die real gesteuerte Flugbahn von der berechneten um mehr als eine vorgegebene Toleranz abweicht. Dann kann es sinnvoll sein, einen neuen Planungszyklus mit den realen Flugdaten zu beginnen. Ggf. kann ein noch laufender Planungszyklus abgebrochen werden, um die realen Daten zügig zu berücksichtigen.

Die Erfindung ist außerdem gerichtet auf einen durch ein Triebwerk angetriebenen Flugkörper mit einer Steuereinheit. Zur Lösung der auf den Flugkörper gerichteten Aufgabe ist die Steuereinheit erfindungsgemäß dazu vorbereitet, einen Flug zu einem Ziel innerhalb einer Midcourse-Phase des Flugs zu lenken und in einem Planungszyklus
a) eine Prädiktion einer möglichen Flugbahn des Flugkörpers von seinem aktuellen Flugpunkt zum Ziel mit einem Prädiktor zu erstellen,
b) eine zukünftige Annäherung des Flugkörpers ans Ziel auf dieser Flugbahn anhand des Prädiktors zu bestimmen und zu bewerten,
c) weitere mögliche Flugbahnen des Flugkörpers zum Ziel ausgehend vom gleichen aktuellen Flugpunkt zu prädizieren durch eine mehrfache Variation von Steuergrößen des Flugkörpers, wobei resultierende Annäherungen des Flugkörpers ans Ziel jeweils bewertet werden, und
d) anhand der Bewertungen eine der Flugbahnen des Flugkörpers auszuwählen,
sowie eine Lenkung zum Fliegen entlang eines ersten Teilstücks dieser Flugbahn zu steuern, und den Planungszyklus mehrfach für nachfolgende Teilstücke zu wiederholen.

Die bisher gegebene Beschreibung vorteilhafter Ausgestaltungen der Erfindung enthält zahlreiche Merkmale, die teilweise in einigen abhängigen Ansprüchen zu mehreren zusammengefasst wiedergegeben sind. Die Merkmale können jedoch zweckmäßigerweise auch einzeln betrachtet und zu sinnvollen weiteren Kombinationen zusammengefasst werden, insbesondere bei Rückbezügen von Ansprüchen, sodass ein einzelnes Merkmal eines abhängigen Anspruchs mit einem einzelnen, mehreren oder allen Merkmalen eines anderen abhängigen Anspruchs kombinierbar ist. Außerdem sind diese Merkmale jeweils einzeln und in beliebiger geeigneter Kombination sowohl mit dem erfindungsgemäßen Verfahren als auch mit der erfindungsgemäßen Vorrichtung gemäß den unabhängigen Ansprüchen kombinierbar. So sind Verfahrensmerkmale auch als Eigenschaften der entsprechenden Vorrichtungseinheit gegenständlich formuliert zu sehen und funktionale Vorrichtungsmerkmale auch als entsprechende Verfahrensmerkmale.

Die oben beschriebenen Eigenschaften, Merkmale und Vorteile dieser Erfindung sowie die Art und Weise, wie diese erreicht werden, werden klarer und deutlicher verständlich in Zusammenhang mit der folgenden Beschreibung der Ausführungsbeispiele, die im Zusammenhang mit den Zeichnungen näher erläutert werden. Die Ausführungsbeispiele dienen der Erläuterung der Erfindung und beschränken die Erfindung nicht auf die darin angegebene Kombination von Merkmalen, auch nicht in Bezug auf funktionale Merkmale. Außerdem können dazu geeignete Merkmale eines jeden Ausführungsbeispiels auch explizit isoliert betrachtet, aus einem Ausführungsbeispiel entfernt, in ein anderes Ausführungsbeispiel zu dessen Ergänzung eingebracht und/oder mit einem beliebigen der Ansprüche kombiniert werden.

Es zeigen:
- FIG 1: einen Flugkörper in einem Anflug auf ein Ziel,
- FIG 2: ein Flussdiagram eines Verfahrens zur Bestimmung einer Flugbahn des Flugkörpers zum Ziel,
- FIG 3: die Flugbahnen des Flugkörpers und des Ziels und
- FIG 4: ein Diagramm mit Querbeschleunigungen des Flugkörpers.

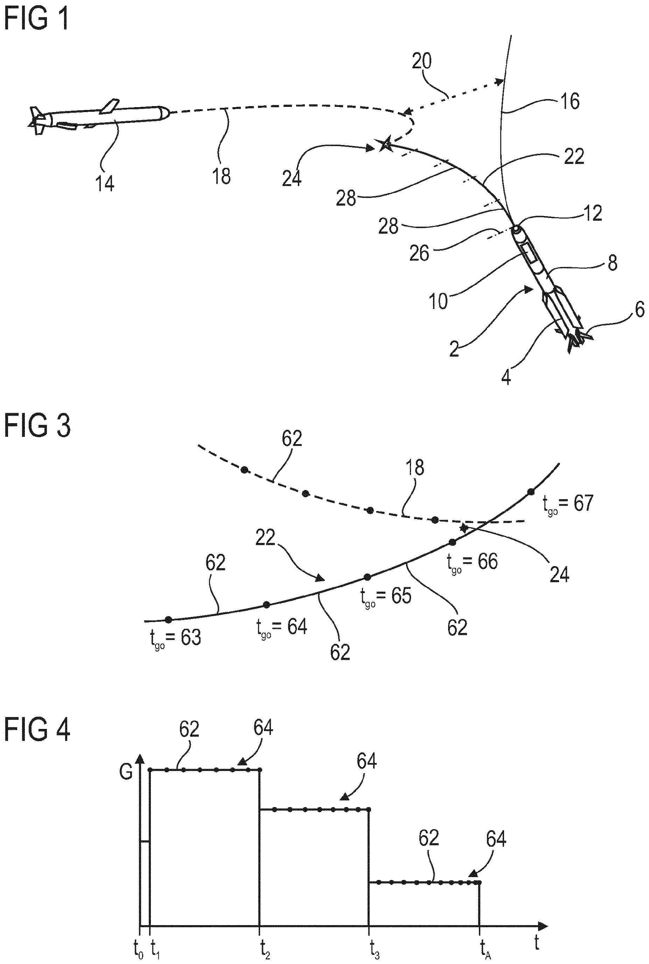

FIG 1 zeigt einen Flugkörper 2 in Form eines Lenkflugkörpers mit einem Raketenmotor 4, Lenkflügeln 6, einem Wirkkörper 8, einer Steuereinheit 10 und einem Infrarot-Suchkopf 12. Der Flugkörper 2 ist ein Abfangflugkörper während eines Midcourse-Flugs auf dem Weg zu einem Ziel 14, das er abfangen soll. Das Ziel 14 ist ein Marschflugkörper im Flug. Um das Ziel 14 zu erreichen, ist eine angenommene Flugbahn des Ziels 14 im Flugkörper 2 hinterlegt, die beispielsweise von einer Bodenstation, wie einem Waffensystem, an den Flugkörper 2 übermittelt wurde. Die Flugbahn 16 des Flugkörpers 2 ist an die angenommene Flugbahn des Ziels 14 angepasst, sodass sich Flugkörper 2 und Ziel 14 in einem Predicted Intercept Point (PIP) treffen.

Während des Midcourse-Flugs des Flugkörpers 2 ändert das Ziel 14 seinen angenommenen Kurs, um dem Flugkörper 2 auszuweichen. Die Kursänderung wird analysiert, beispielsweise von der Bodenstation, und es wird angenommen, dass das Ziel 14 auf einer neuen Flugbahn 18 eine Kurve fliegen wird, bis es Tail-on zum Flugkörper 2 ausgerichtet auf einem Fluchtflug ist. Diese neue angenommene Flugbahn 18 wird dem Flugkörper 2 mitgeteilt. Bei einem Weiterflug des Flugkörpers 2 auf seiner Flugbahn 16 wäre der Abstand 20 zwischen Ziel 14 und Flugkörper 2 am nahesten Annäherungspunkt zu groß, um eine Bekämpfung zu ermöglichen. Daher berechnet auch der Flugkörper 2 eine neue Flugbahn 22, auf der sich Ziel 14 und Flugkörper 2 mit einer für eine Bekämpfung ausreichenden Annäherung begegnen. Die Annäherung ist am Annäherungspunkt 24, an dem sich der Flugkörper 2 und das Ziel 14 am nahesten kommen.

Die Flugbahn 22 ist eine berechnete, theoretische Flugbahn 22. Sie beginnt am aktuellen Flugpunkt 26 und wird über ihre gesamte Länge berechnet, jedoch nur für ein vorderes Teilstück 28 abgeflogen. Während dieses Abfliegens wird die theoretische Flugbahn 22 neu berechnet und ein nächstes Teilstück 28 wird dann anhand der Steuergrößen der dann neuen Flugbahn 22 abgeflogen. Die real geflogene Flugbahn des Flugkörpers 2 orientiert sich insofern an der berechneten Flugbahn 22, da sie mit den aus der Berechnung der Flugbahn 22 gewonnenen Steuergrößen der Lenkung des Flugkörpers 2 geflogen wird. Beispielsweise sind die Steuergrößen Querbeschleunigungen. Es werden dann die Lenkflügel 6 des Flugkörpers 2 so angesteuert, dass die gewünschten Querbeschleunigungen, also Steuergrößen, erreicht werden. Die reale Flugbahn muss nicht perfekt identisch mit der berechneten Flugbahn 22 sein. Die Berechnungen der Flugbahn 22 erfolgt zyklisch von Teilstück 28 zu Teilstück 28 in mehreren Durchläufen eines MPG-Zyklus (Model Predictive Guidance). Sie kann unabhängig vom oben geschilderten Szenario erfolgen.

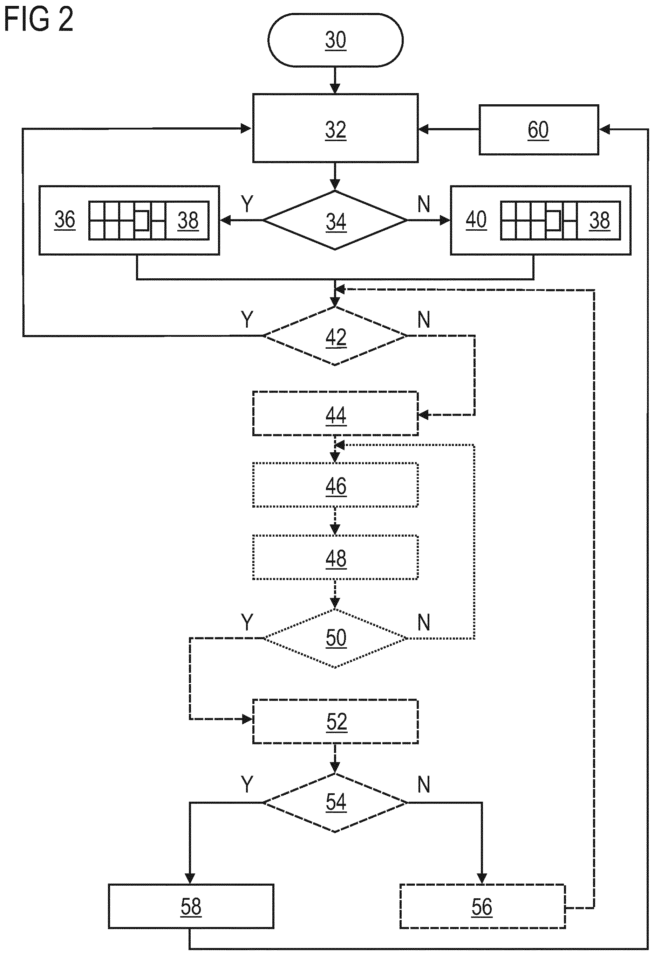

FIG 2 zeigt ein Flussdiagram eines Verfahrens zur Bestimmung einer Flugbahn 22 des Flugkörpers 2 zum Ziel 14. Die einzelnen Schritte werden von der Steuereinheit 10 des Flugkörpers 2 ausgeführt und sind im Folgenden beschrieben.

| | |
|---|---|
| 30 | Beginn des Verfahrens, Beginn des MPG-Zyklus (Model Predictive Guidance). Dieser Zyklus ist in FIG 2 in durchgezogenen Feldern und Pfeilen dargestellt. Er umschließt den Planungszyklus (gestrichelte Felder und Pfeile), der wiederum den Prädiktionszyklus (punktierte Felder und Pfeile) umschließt, und durchläuft für jedes Teilstück 28 (siehe FIG 1) der Flugbahn 22 einen Durchlauf. |
| 32 | Beginn des ersten Durchlaufs des MPG-Zyklus. Er umschließt nach initialisierenden Schritten 32 - 40 den Planungszyklus. Die initialisierenden Schritte 32 - 40 sind: |
| | a) Einlesen des Flugzustands des Ziels 14, wie Position, Geschwindigkeit mit Flugrichtung und eventuell Beschleunigung aus Daten einer Bodenstation oder eigenen Daten, z.B. von einem Suchkopf 12, und |
| | b) Einlesen des eigenen Flugzustands aus der bordeigenen Navigationsrechnung und/oder Daten einer Bodenstation. Hierzu gehört das Einlesen der eigenen Position im Raum, denn diese bildet den aktuellen Flugpunkt 26, von dem aus eine Vielzahl von Flugbahnen 22 berechnet werden, die alle vom gleichen Flugpunkt 26 starten. Alternativ kann der aktuelle Flugpunkt 26 an das Ende des aktuellen Teilstücks 28 der Flugbahn 22 gelegt werden oder an einen Ort der Flugbahn 22, der zwischen Beginn und Ende des Teilstücks 28 liegt. |
| 34 | Abfrage: Erster MPG-Zyklus? |
| 36 | Ja: Initialisierung der Startwerte der Steuerparameter (erste Steuergrößen) zur aktiven Beeinflussung der eigenen Flugbahn 22. |
| 38 | Prädiktor mit sechs Steuergrößen der Querbeschleunigung, einer Steuergröße des Zeitpunkts des Zündens des zweiten Triebwerkspulses, dem Flugzustand des Ziels 14 bzw. dessen Flugbahn 18 und dem eigenen Flugzustand. Der Flugzustand des Ziels 14 ist im Prädiktor 38 nur symbolisch mit einem einzigen Feld dargestellt. Der Flugzustand des Ziels 14 kann analog zum Abwehrflugkörper 2 mit mehreren Steuergrößen berechnet werden, sodass der Prädiktor 38 dann mehr als die dargestellten Steuergrößen enthält. |
| 40 | Nein: Übernahme der Steuergrößen aus dem letzten Durchlauf des MPG-Zyklus als Startwerte der Steuerparameter zur aktiven Beeinflussung der eigenen Flugbahn 22. In beiden Schritten 36, 40 enthält der Prädiktor 38 eine mathematische Beschreibung einer Flugbahn 22 des Flugkörpers 2. In Schritt |
| | 36 eine erste, unoptimierte Flugbahn, in Schritt 40 die Flugbahn 22 des letzten Planungszyklus. Außerdem enthält der Prädiktor 38 eine mathematische Beschreibung einer Flugbahn 18 des Ziels 14. |
| 42 | Abfrage: Liegen neue Zieldaten vor? Falls ja, werden diese im Schritt 32 eingelesen. Falls nein, beginnt der Planungszyklus. |
| 44 | Initialisierung der Prädiktion von Ziel 14 und Flugkörper 2, T_{go} = 0, die Restflugzeit wird auf Null gesetzt. |
| 46 | Berechnung der Prädiktionsschrittweite ΔT. Sie ist unten zu den FIGs 3 und 4 ausführlich beschrieben. |
| 48 | Prädiktionsschritt T_{go} := T_{go} + ΔT. In jedem Prädiktionsschritt wird die Zielbahn 18 und die Flugbahn 22 des Flugkörpers 2 berechnet. Die Flugbahn 22 des Flugkörpers 2 startet vom aktuellen Flugpunkt 26. Die Flugbahn 18 des Ziels 14 wird aus den Zieldaten berechnet, also beispielsweise ob sie beschleunigt oder unbeschleunigt, ballistisch oder durch Fluchtmanöver gekennzeichnet ist. Die Flugbahn 22 des Flugkörpers 2 wird anhand der Steuergrößen berechnet, wobei passive, also nicht regelbare, Effekte, wie Schub und Widerstand einbezogen werden. |
| 50 | Abfrage: Ist die naheste Annäherung 24 von Ziel 14 und Flugkörper 2 erreicht? Die Annäherung 24 kann durch die berechnete Annäherungsgeschwindigkeit beschrieben werden, fällt diese unter Null, so entfernen sich Ziel 14 und Flugkörper 2 wieder, sodass die naheste Annäherung in der (berechneten) Vergangenheit liegt und bestimmt werden kann. Liegt die naheste Annäherung von Ziel 14 und Flugkörper 2 noch nicht vor, so springt das Verfahren zurück zu Schritt 46, in dem die Prädiktionsschrittweite ΔT des nächsten Schritts berechnet wird und in Schritt 48 die Flugbahnen 18, 22 im nächsten Prädiktionsschritt berechnet werden. |
| 52 | Wenn die naheste Annäherung 24 von Ziel 14 und Flugkörper 2 vorliegt, so ist die Berechnung der Flugbahn 22 abgeschlossen. Nun wird in Schritt 52 ihre Güte anhand der Güte- oder Kostenfunktion bestimmt. |
| 54 | Abfrage: Ist das temporäre Güteoptimum erreicht? Ist ein Güteergebnis ausreichend, so kann die Bahn mit dem ausreichenden Güteergebnis zur Flugsteuerung verwendet werden. Ist das temporäre Güteoptimum noch nicht erreicht, so können Abbruchkriterien für den Planungszyklus geprüft werden. Liegt ein Abbruchkriterium vor, so werden die Güteergebnisse der bisher errechneten Flugbahnen 22 miteinander verglichen und die Flugbahn 22 mit dem besten Güteergebnis wird als temporäres Güteoptimum angesehen und zur Flugsteuerung verwendet. |
| 56 | Ist das temporäre Güteoptimum noch nicht erreicht, so werden die Steuergrößen variiert. Anschließend springt das Verfahren zurück zum Beginn des Planungszyklus und es wird eine neue Flugbahn 22, die vom gleichen aktuellen Flugpunkt 26 beginnt, berechnet und bewertet. Sollten sich zwischenzeitlich neue Zieldaten eingestellt haben, so werden sie über die Schritte 42 und 32 aufgenommen und der Planungszyklus beginnt von vorne. Die bisherigen Flugbahnen 22 des bisherigen Planungszyklus werden verworfen, da deren Güten sich noch auf die alten Zieldaten beziehen und nicht mehr korrekt sind. Dies ist in FIG 1 beispielhaft dargestellt. Die alte Flugbahn 16 ist nicht mehr aktuell, da sich die Flugbahn 18 des Ziels 14 geändert hat. |
| 58 | Ist das temporäre Güteoptimum erreicht, so ist der Planungszyklus beendet. Die Flugbahn 22 mit dem Güteoptimum wird als Grundlage zur Flugsteuerung herangezogen. Das heißt, dass die zu Berechnung dieser Flugbahn 22 verwendeten Steuergrößen nun zur Steuerung bzw. Lenkung des realen Flugs verwendet werden. Der Flugkörper wird entlang dieses Teilstücks 28 der Flugbahn 22 gesteuert, wobei während dieses Flugs der nächste Planungszyklus für das nachfolgende Teilstück 28 begonnen wird. Hierfür springt das Verfahren über Schritt 60 zurück zu Schritt 32. |
| 60 | Der Schritt 60 zuvor dient dazu, eventuell eine vorgegebene Zeit zu warten, bis der neue Planungszyklus beginnt. |
| 32 | Es beginnt der zweite Durchlauf des MPG-Zyklus. Es wird der Flugzustand von Ziel 14 und Flugkörper 2 aktualisiert und über die Abfrage 34 in Schritt 40 der Prädiktor 38 aktualisiert, wobei dieser die optimierten Steuergrößen aus dem letzten Planungszyklus erhält. |

In Schritt 52 wird die Güte der Flugbahn 22 bestimmt, die Flugbahn 22 wird bewertet. Dies kann unter Verwendung von einem oder mehreren Gütekriterien erfolgen. Eines der Gütekriterien ist der naheste Abstand des Flugkörpers 2 zum Ziel 14 im Annäherungspunkt 24, also dem Punkt der Flugbahn 22, an dem der Abstand zwischen Flugkörper 2 und Ziel 14 am geringsten ist. Je kleiner der Abstand ist, desto höher ist die Bewertung oder Güte. Ein weiteres Gütekriterium ist die Flugzeit vom aktuellen Flugpunkt 26 zum Annäherungspunkt 24. Je kleiner die Flugzeit ist, desto höher ist die Bewertung oder Güte. Auch die Fluggeschwindigkeit des Flugkörpers 2 im Annäherungspunkt 24 ist ein Gütekriterium, da eine hohe Geschwindigkeit die Zuverlässigkeit, das Ziel 14 zu treffen oder ihm auch bei Fluchtbewegungen ausreichend nahe zu kommen, erhöht. Weiter ist die Begegnungsgeometrie von Flugkörper 2 und Ziel 14 am Annäherungspunkt 24 von Bedeutung. Je nach Annäherungsgeometrie ist eine Verfolgung des Ziels 14 einfacher oder schwieriger. Auch kann das Einhalten einer vorbestimmten Gipfelhöhe wichtig sein, um unter einem Radar zu bleiben. Ein weiteres Gütekriterium ist ein Lenkaufwand des Flugkörpers 2 entlang seiner Flugbahn. Je geringer der Lenkaufwand ist, desto mehr Lenkreserve steht dem Flugkörper zur Verfolgung eines flüchtenden Ziels 14 zur Verfügung, sodass das Erreichen eines geringen Bekämpfungsabstands zuverlässiger ist. Da die Lenkreserve eher am Ende der Flugbahn 22 wichtig ist, kann ein späterer Lenkaufwand die Bewertung mehr senken, als der gleiche Lenkaufwand früher.

FIG 3 zeigt jeweils einen Endteil der berechneten Flugbahnen 18 und 22. Der Prädiktionszyklus hat bei T_{go} = 0 begonnen, wobei bei jedem Prädiktionsschritt 62 T_{go} um 1 bzw. ΔT hochgesetzt wird. Auf diese Weise nähern sich die beiden Flugbahnen 18, 22 bzw. der Flugkörper 2 und das Ziel 14 aneinander an bis sie während des 66sten Prädiktionsschritts 62 die naheste Annäherung 24 erfahren. Zu Beginn des 67sten Prädiktionsschritts 62 hat sich der Abstand wieder vergrößert, die Annäherungsgeschwindigkeit wird negativ und die Schleife des Prädiktionszyklus kann im Schritt 50 beendet werden. Die naheste Annäherung 24 wird bestimmt und die Annäherung 24 wird bewertet. In die Bewertung geht auch die Restflugzeit vom aktuellen Flugpunkt 26 bis zur Annäherung 24 mit ein, die im vorliegenden Beispiel etwas mehr als 66 Prädiktionsschritte 62, also Zeitschritte, beträgt.

Die Flugbahn 18 des Ziels 14 wird analog zur Flugbahn 22 des Flugkörpers 2 bestimmt, wie anhand der Punkte auf der Flugbahn 18 angedeutet ist. Auch hier sind die gleichen Prädiktionsschritte 62 gezeigt, wobei auf deren gleicher Beschriftung wie bei der Flugbahn 22 der Übersichtlichkeit halber verzichtet wurde. Im Unterschied zur Flugbahn 22 wird die Flugbahn 18 nicht variiert, bleibt also immer gleich, bis sich die Zieldaten ändern und die Flugbahn 18 entsprechend angepasst wird. Die Flugbahn 18 des Ziels 14 muss keine konkrete Bahn sein, sie kann auch eine aus mehreren möglichen Bahnen abgeleitete theoretische Flugbahn 18 sein, wie eine mittlere Flugbahn 18. Auch ist es möglich, dass mehrere Flugbahnen 18 des Ziels 14 in den Prädiktor 38 eingehen. Es kann beispielsweise vorteilhaft sein, dass mehrere angenommene Flugbahnen 18 des Ziels 14 bestimmt werden und in die Bewertung mit eingeht, wie lange der Flugkörper 2 das Ziel 14 auf allen diesen Flugbahnen 18 erreichen kann. In der Bewertung kann dann von Flugbahn 18 zu Flugbahn 18 bestimmt werden, wie lange die jeweilige Flugbahn 18 noch für den Flugkörper 2 erreichbar ist.

FIG 4 zeigt ein Diagramm der Querbeschleunigung G des Flugkörpers 2 über die Zeit t. Jede berechnete Flugbahn 22 wird in mehrere Abschnitte 64 eingeteilt, im gezeigten Beispiel drei Abschnitte 64. Die Abschnitte 64 können gleich lang sein. t₀ gibt den aktuellen Zeitpunkt an, während dem die Berechnung stattfindet. Für den Fall, dass der aktuelle Flugpunkt 26 eine kleine Zeitdauer in der Zukunft liegt, gibt t₁ den Zeitpunkt an, an dem der Flugkörper 2 den aktuellen Flugpunkt 26 erreicht. Von diesem Zeit- bzw. Ortspunkt werden alle Flugbahnen 22 berechnet. Es kann der Beginn eines Teilstücks 28 der Flugbahn 22 sein. Die Zeitpunkte t₂, t₃ und t_{A} markieren jeweils das Ende der drei Abschnitte 64. Zum Zeitpunkt t_{A} ist die naheste Annäherung 24 - vermutlich - erreicht, wobei sich das erst im Laufe der Prädiktion, also der Berechnung der Flugbahn 22, herausstellt.

Während eines jeden der Abschnitte 64 ist die Querbeschleunigung G des Flugkörpers 2 in beide Raumrichtungen konstant. In FIG 3 ist nur eine der beiden Querbeschleunigungen G gezeigt, beispielsweise in y-Richtung, die entlang der drei Abschnitte 64 drei freie, also wählbare, Steuergrößen ergibt. Der Flugkörper 2 fliegt also eine Flugbahn 22 aus drei in etwa gleich langen Abschnitten 64, und in jedem der Abschnitte 64 fliegt er einen Kreisbahnabschnitt. Die Querbeschleunigungen G sind hierbei so gewählt - oder ergeben sich aus der Kostenfunktion - dass sie im Laufe des Flugs abnehmen, wie in FIG 4 gezeigt ist, der Lenkaufwand also abnimmt, sodass am Ende des Flugs noch ein möglichst großer Spielraum für die Verfolgung von intensiven Ausweichmanövern verbleibt.

Die Länge der Prädiktionsschritte 62 wird in Schritt 46 festgelegt. Sie kann für jeden Prädiktionsschritt 62 individuell festgelegt werden. Hierbei kann eines oder mehrere der folgenden Kriterien herangezogen werden:
- alle Steuergrößen sollen während eines Prädiktionsschritts 62 gleich bleiben, sie sollen sich also nur von einem zum nächsten Prädiktionsschritt 62 verändern. Auf den Zeitpunkt einer Größenveränderung wird ein Prädiktionsschritt 62 gelegt.
- An den Zeitpunkt des Verlöschens oder Zündens eines Triebwerkspulses wird ein Prädiktionsschritt 62 gelegt.
- Ändert sich ein Manöver des Ziels 14, so wird an den Zeitpunkt der Änderung ein Prädiktionsschritt 62 gelegt.
- Die Schrittweite ΔT wird umgekehrt proportional zu einer Manöverstärke/Beschleunigung des Ziels 14 gewählt.
- Ändert sich ein Lenkmanöver des Flugkörpers 2, so wird ein Prädiktionsschritt 62 auf den Zeitpunkt der Änderung gelegt.
- Die Schrittweite ΔT nimmt mit einem Abstand des Flugkörpers 2 zum Ziel 14 ab. Beispielsweise wird sie proportional zum Abstand des Flugkörpers 2 zum Ziel 14 gewählt.

Reicht beispielsweise einer der Prädiktionsschritte 62 über einen Abschnitt 64 hinaus, so würde sich während des Prädiktionsschritts 62 die Steuergröße ändern, vermutlich beide Steuergrößen und ggf. auch die Steuergröße des Starts des zweiten Triebwerkspulses. Dies würde die Integration des Prädiktionsschritts 62 erheblich stören. Daher wird der letzte Prädiktionsschritt 62 am Ende eines jeden Abschnitts 64 am Abschnittsende abgebrochen, sodass der nächstfolgende Prädiktionsschritt 62 mit dem neuen Abschnitt 64 beginnt. Hier ist dann der Prädiktionsschritt 62 kürzer als die Länge ΔT zuvor.

Alternativ zu den über einen Abschnitt 64 konstanten Steuergrößen können die Steuergrößen Funktionen über die Zeit bilden. Die Steuergrößen sind nicht konstant, sondern können von Prädiktionsschritt 62 zu Prädiktionsschritt 62 schrittweise verändert werden oder sogar kontinuierlich verändert werden, sodass die Prädiktionsschritte 62 jeweils veränderliche Querbeschleunigungen G aufweisen. Die Funktionen können von Abschnitt 64 zu Abschnitt 64 variiert werden.

Die Anzahl der Abschnitte 64 bleibt während des realen Flugs des Flugkörpers 2 zum Ziel 14 bzw. zur Annäherung 24 zweckmäßigerweise konstant. Auf diese Weise werden die Abschnitte 64 von Teilstück 28 zu Teilstück 28 immer kürzer, was zu einer höheren Flexibilität der Trajektorie des Flugkörpers 2 im Laufe seines Flugs führt.

In Schritt 56 werden die Steuergrößen variiert. Das geschieht unter Nutzung eines Suchverfahrens zur numerischen Parameteroptimierung, z.B. mittels Gauß-Seidel, Newton o.ä. Besonders vorteilhaft ist ein Simplexverfahren, wie nach Nelder-Mead.

In Schritt 54 findet die Abfrage statt, ob das temporäre Güteoptimum erreicht ist. Mit Erreichen des Güteoptimums kann der aktuelle Planungszyklus beendet werden. Das Güteoptimum muss kein absolutes Optimum sein, ein temporäre Optimum ist ausreichend, also die beste zur Verfügung stehende Flugbahn 22. Das Güteoptimum kann als erreicht angesehen werden, wenn zumindest eine der Bewertungen einen vorbestimmten Güteschwellwert erreicht. Dies kann das Hauptkriterium sein, dem folgende weitere Kriterien untergeordnet sind. Wenn die Bewertungen beispielsweise gegen eine Konstante laufen, ist deutlich, dass eine weitere Variation der Flugbahnen 22 vermutlich nicht zu einer deutlichen Vergrößerung der Güte führen wird. Die Prädiktion kann abgebrochen und der Planungszyklus kann beendet werden. Auch wenn bei der Variation der Steuergrößen der Raumabstand der Steuergrößen im Parameterraum unter einen vorbestimmten Grenzwert fällt, hat die Prädiktion ihre Grenzen erreicht und kann abgebrochen werden. Ist schließlich keines der obigen Kriterien erreicht, so kann als letztes Kriterium eine Maximalanzahl an berechneten Flugbahnen 22 den Planungszyklus beenden. Der Flugkörper 2 nutzt dann die bislang am besten bewertete Flugbahn. Die Flugbahn 22 kann mit Beginn des nächsten Teilstücks 28 verbessert werden.

Normalerweise wird ein neuer Planungszyklus begonnen, wenn der letzte Planungszyklus abgeschlossen ist. Es kann jedoch vorkommen, dass andere Kriterien zum Beginn eines neuen Planungszyklus vorteilhafter sind. Ist beispielsweise sehr schnell eine optimale Flugbahn 22 gefunden, kann mit dem Beginn eines Planungszyklus eine Weile gewartet werden (Schritt 60), z.B. bis ein vorbestimmter Zeitpunkt erreicht ist oder eine Wartezeit vergangen ist. Wenn neue Zieldaten vorliegen, ist es ebenfalls vorteilhaft, einen neuen Planungszyklus zu beginnen. Entweder wird der noch laufende Planungszyklus abgebrochen und dessen Ergebnisse verworfen, wie zu Schritt 42 beschrieben ist, oder die Wartezeit in Schritt 60 wird vorzeitig beendet.

### Bezugszeichenliste

- 2: Flugkörper
- 4: Raketenmotor
- 6: Lenkflügel
- 8: Wirkkörper
- 10: Steuereinheit
- 12: Suchkopf
- 14: Ziel
- 16: Flugbahn
- 18: Flugbahn
- 20: Abstand
- 22: Flugbahn
- 24: Annäherung
- 26: Aktueller Flugpunkt
- 28: Teilstück
- 30: Beginn des Verfahrens
- 32: Beginn des MPG-Zyklus
- 34: Abfrage: Erster MPG-Zyklus?
- 36: Initialisierung der Steuergrößen
- 38: Prädiktor
- 40: Übernahme der Steuergrößen
- 42: Abfrage: Liegen neue Zieldaten vor?
- 44: Initialisierung der Prädiktion
- 46: Berechnung der Prädiktionsschrittweite
- 48: Setzen eines neuen Prädiktionsschritts
- 50: Abfrage: Naheste Annäherung erreicht?
- 52: Berechnung der Gütefunktion
- 54: Abfrage: Temporäres Güteoptimum erreicht?
- 56: Variation der Steuergrößen
- 58: Planungszyklus beendet. Steuergrößen übernehmen
- 60: Wartezeit
- 62: Prädiktionsschritt
- 64: Abschnitt
- G: Querbeschleunigung
- T_{go}: Restflugzeit
- ΔT: Prädiktionsschrittweite

## Patentansprüche

1. Verfahren zum Lenken eines durch ein Triebwerk (4) angetriebenen Flugkörpers (2) zu einem manövrierfähigen Ziel (14) innerhalb einer Midcourse-Phase des Flugs, bei dem in einem Planungszyklus
a) eine Prädiktion einer möglichen Flugbahn (22) des Flugkörpers (2) von seinem aktuellen Flugpunkt (26) zum Ziel (14) mit einem Prädiktor (38) erstellt wird,
b) eine zukünftige Annäherung (24) des Flugkörpers (2) ans Ziel (14) auf dieser Flugbahn (22) anhand des Prädiktors (38) bestimmt und bewertet (52) wird,
c) weitere Prädiktionen möglicher Flugbahnen (22) des Flugkörpers (2) zum Ziel (14) ausgehend vom gleichen aktuellen Flugpunkt (26) berechnet werden durch mehrfache Variationen (56) von Steuergrößen des Flugkörpers (2), wobei die resultierenden Annäherungen (24) des Flugkörpers (2) ans Ziel (14) jeweils bewertet werden, und
d) anhand der Bewertungen eine der Flugbahnen (22) des Flugkörpers (2) ausgewählt wird, und
ein erstes Teilstück (28) dieser Flugbahn (22) abgeflogen und der Planungszyklus mehrfach für nachfolgende Teilstücke (28) wiederholt wird.

2. Verfahren nach Anspruch 1,
**dadurch gekennzeichnet,**
**dass** der Prädiktor (38) auch eine angenommene Flugbahn (18) des Ziels (14) beschreibt.

3. Verfahren nach Anspruch 1 oder 2,
**dadurch gekennzeichnet,**
**dass** sich die Prädiktoren (38) durch unterschiedliche Steuergrößen der gleichen Steuerparameter voneinander unterscheiden, wobei die Steuergrößen insbesondere unterschiedliche Funktionen über die Zeit sind, weiter insbesondere unterschiedliche Werte der Steuerparameter.

4. Verfahren nach einem der vorhergehenden Ansprüche,
**dadurch gekennzeichnet,**
**dass** Variationen der Flugbahn (22) des Flugkörpers (2) in drei ineinander liegenden Rechenzyklen erfolgen:
- der Berechnung einer Flugbahn (22) des Flugkörpers (2) in mehreren Prädiktionsschritten (62) in einem Prädiktionszyklus,
- die Berechnung mehrerer Flugbahnen (22) in einem Planungszyklus und
- die Wiederholung der Planungszyklen für mehrere Teilstücke (28) entlang der realen Flugbahn in einem Modell Predictive Guidance-Zyklus.

5. Verfahren nach einem der vorhergehenden Ansprüche,
**dadurch gekennzeichnet,**
**dass** der Prädiktor (38) die Flugbahn (22) des Flugkörpers (2) in mehrere Abschnitte (64) unterteilt und die Flugbahn (22) für jeden Abschnitt (64) mit eigenen Steuergrößen beschreibt.

6. Verfahren nach Anspruch 5,
**dadurch gekennzeichnet,**
**dass** die Anzahl der Abschnitte (64) während des realen Flugs des Flugkörpers (2) konstant bleibt, sodass die Abschnitte (64) von Teilstück (28) zu Teilstück (28) kürzer werden.

7. Verfahren nach einem der vorhergehenden Ansprüche,
**dadurch gekennzeichnet,**
**dass** die Prädiktion der Flugbahn (22) des Flugkörpers (2) in mehrere Prädiktionsschritte (62) unterteilt wird, wobei die berechnete Beschleunigung des Flugkörpers (2) über jeden der Prädiktionsschritte (62) konstant ist.

8. Verfahren nach einem der vorhergehenden Ansprüche,
**dadurch gekennzeichnet,**
**dass** mehrere angenommene Flugbahnen (18) des Ziels (14) bestimmt werden und daraus eine Flugbahn (18) des Ziels (14) abgeleitet wird, die in den Prädiktor (38) eingeht.

9. Verfahren nach einem der vorhergehenden Ansprüche,
**dadurch gekennzeichnet,**
**dass** die Bewertung unter Verwendung von einem oder mehreren der folgenden Gütekriterien durchgeführt wird:
- nahester Abstand des Flugkörpers (2) zum Ziel (14),
- die Flugzeit vom aktuellen Flugpunkt (26) zu einem Annäherungspunkt (24),
- die Fluggeschwindigkeit des Flugkörpers (2) im Annäherungspunkt (24),
- die Begegnungsgeometrie von Flugkörper (2) und Ziel (14) im Annäherungspunkt (24),
- das Einhalten einer vorbestimmten Gipfelhöhe.

10. Verfahren nach einem der vorhergehenden Ansprüche,
**dadurch gekennzeichnet,**
**dass** in die Bewertung ein Lenkaufwand des Flugkörpers (2) entlang seiner Flugbahn (22) eingeht.

11. Verfahren nach Anspruch 10,
**dadurch gekennzeichnet,**
**dass** ein späterer Lenkaufwand die Bewertung mehr senkt, als der gleiche Lenkaufwand früher.

12. Verfahren nach einem der vorhergehenden Ansprüche,
**dadurch gekennzeichnet,**
**dass** mehrere angenommene Flugbahnen (18) des Ziels (14) prädiziert werden und in die Bewertung mit eingeht, wie lange der Flugkörper (2) das Ziel (14) auf allen diesen Flugbahnen (18) erreichen kann.

13. Verfahren nach einem der vorhergehenden Ansprüche,
**dadurch gekennzeichnet,**
**dass** ein Planungszyklus beendet wird, wenn eines der folgenden Kriterien erreicht wird:
- Zumindest eine der Bewertungen erreicht einen vorbestimmten Schwellwert.
- Die Bewertungen laufen gegen eine Konstante.
- Bei der Variation der Steuergrößen fällt der Raumabstand der Steuergrößen im Parameterraum unter einen vorbestimmten Grenzwert.
- Eine Maximalanzahl an Bahnen wurde berechnet.

14. Verfahren nach einem der vorhergehenden Ansprüche,
**dadurch gekennzeichnet,**
**dass** ein neuer Planungszyklus begonnen wird, wenn
- der letzte Planungszyklus abgeschlossen ist oder
- ein vorbestimmter Zeitpunkt erreicht ist oder
- neue Zieldaten vorliegen oder
- der Ist-Zustand des Flugkörpers (2) vom berechneten Zustand mehr als um ein vorbestimmtes Maß abweicht.

15. Durch ein Triebwerk (4) angetriebener Flugkörper (2) mit einer Steuereinheit (10), die dazu vorbereitet ist, einen Flug zu einem Ziel (14) innerhalb einer Midcourse-Phase des Flugs zu lenken und in einem Planungszyklus
a) eine Prädiktion einer möglichen Flugbahn (22) des Flugkörpers (2) von seinem aktuellen Flugpunkt (26) zum Ziel (14) mit einem Prädiktor (38) zu erstellen,
b) eine zukünftige Annäherung (24) des Flugkörpers (2) ans Ziel (14) auf dieser Flugbahn (22) anhand des Prädiktors (38) zu bestimmen und zu bewerten (52),
c) weitere mögliche Flugbahnen (22) des Flugkörpers (2) zum Ziel (14) ausgehend vom gleichen aktuellen Flugpunkt (26) zu prädizieren durch eine mehrfache Variation von Steuergrößen des Flugkörpers (2), wobei resultierende Annäherungen (24) des Flugkörpers (2) ans Ziel (14) jeweils bewertet (52) werden, und
d) anhand der Bewertungen eine der Flugbahnen (22) des Flugkörpers (2)
auszuwählen,
sowie eine Lenkung zum Fliegen entlang eines ersten Teilstücks (28) dieser Flugbahn (22) zu steuern, und den Planungszyklus mehrfach für nachfolgende Teilstücke (28) zu wiederholen.
